# EUROPÄISCHE PATENTSCHRIFT

(11) **EP 0 662 603 B1**
(45) Veröffentlichungstag und Bekanntmachung des Hinweises auf die Patenterteilung: **12.03.1997**
(21) Anmeldenummer: 93119731.3
(22) Anmeldetag: 08.12.1993
(51) Int. Cl.: G01D 5/34

(54) **Längenmesssystem**
Length measuring system
Système de mesure de longueurs

(43) Veröffentlichungstag der Anmeldung: 12.07.1995
(73) Patentinhaber: Dr. Johannes Heidenhain GmbH, D-83292 Traunreut (DE)
(72) Erfinder: Ernst, Alfons, Dipl.-Ing., D-83301 Traunreut (DE); Nelle, Günther, Dr.-Ing., D-83346 Bergen (DE)

(56) Entgegenhaltungen:
- DE-A- 1 773 460
- DE-A- 2 730 715
- DE-A- 3 928 592

## Beschreibung

Die Erfindung betrifft ein Längenmeßsystem mit einem aus mehreren Teilstücken bestehenden Maßstab gemäß dem Oberbegriff der Ansprüche 1 und 5.

Derartige Längenmeßsysteme sind bereits aus der DE-OS 17 73 460 und der DE-OS 27 30 715 bekannt. Bei diesen Längenmeßsystemen sind zur Abtastung der inkrementalen Teilung der Maßstabteilstücke zwei in Meßrichtung beabstandete Abtasteinrichtungen vorgesehen. Nach der DE-OS 17 73 460 sind neben der inkrementalen Teilung Schaltnocken oder Schaltkulissen angebracht, welche die Abtasteinrichtungen wechselweise einschalten. Die Lage der Schaltnocken oder Schaltkulissen ist so gewählt, daß vor Erreichen einer Stoßstelle zweier Maßstabteilstücke die bis dahin aktive Abtasteinrichtung abgeschaltet wird, während gleichzeitig die andere sich bereits auf dem benachbarten Maßstabteilstück befindliche Abtasteinrichtung eingeschaltet wird. Aufwendige Justierungen an den Maßstabstoßstellen können somit entfallen, da durch die wechselweise Aktivierung der zwei Abtasteinrichtungen die Maßstabteilstücke an den Stoßstellen nicht abgetastet werden.

Bei der DE-OS 27 30 715, von der diese Erfindung ausgeht, ist auf jedem Maßstabteilstück neben der inkrementalen Teilung eine Steuerspur aufgebracht. Diese Steuerspur jedes Maßstabteilstückes ist von einem Ende jedes Teilstückes ausgehend schwarz, also lichtundurchlässig ausgebildet und endet im anderen Endbereich in ein durchsichtiges Fenster.

Diese bekannten Längenmeßsysteme haben den Nachteil, daß die Messung über die gesamte Meßlänge nur inkremental erfolgt, eine Bestimmung der Absolutposition ist nicht möglich.

Um diesen Nachteil zu beheben, werden bei dem Längenmeßsystem gemäß der DE-OS 39 28 592 die Umschaltpositionen von einem externen außerhalb des Längenmeßsystems angeordneten Detektor bestimmt. Dieser Detektor erfaßt die absoluten Positionen über den gesamten Meßbereich. Dieses Meßsystem hat aber den Nachteil, daß außer dem inkrementalen Längenmeßsystem ein weiteres absolutes Meßsystem erforderlich wird.

Aufgabe der Erfindung ist es, ein Längenmeßsystem gemäß der DE-OS 27 30 715 so zu verbessern, daß es bei geringer Baugröße sicher arbeitet und über die gesamte Meßlänge die Absolutposition zur Verfügung steht.

Diese Aufgabe wird durch die Merkmale des Anspruches 1 sowie des Anspruches 5 gelöst.

Die vorteilhafte Ausgestaltung der Erfindung ist in den abhängigen Ansprüchen angegeben.

Die Vorteile der Erfindung bestehen darin, daß die Absolutposition durch das kompakt aufgebaute Längenmeßsystem genügend genau festgestellt werden kann, und daß die Umschaltpositionen exakt festgelegt werden können.

Anhand der schematischen Zeichnungen wird die Erfindung nachfolgend näher erläutert.

Es zeigen
- Figur 1: ein Längenmeßsystem mit einem aus zwei Teilstücken zusammengesetzten Maßstab,
- Figur 2: zwei weitere Teilstücke mit einer feinen inkrementalen Teilung und einer weiteren gröberen inkrementalen Teilung,
- Figur 3: mehrere Teilstücke mit einem flexiblen Codeträger,
- Figur 4: mehrere Teilstücke mit einem weiteren flexiblen Codeträger und
- Figur 5: mehrere Teilstücke in einem Gehäuse.

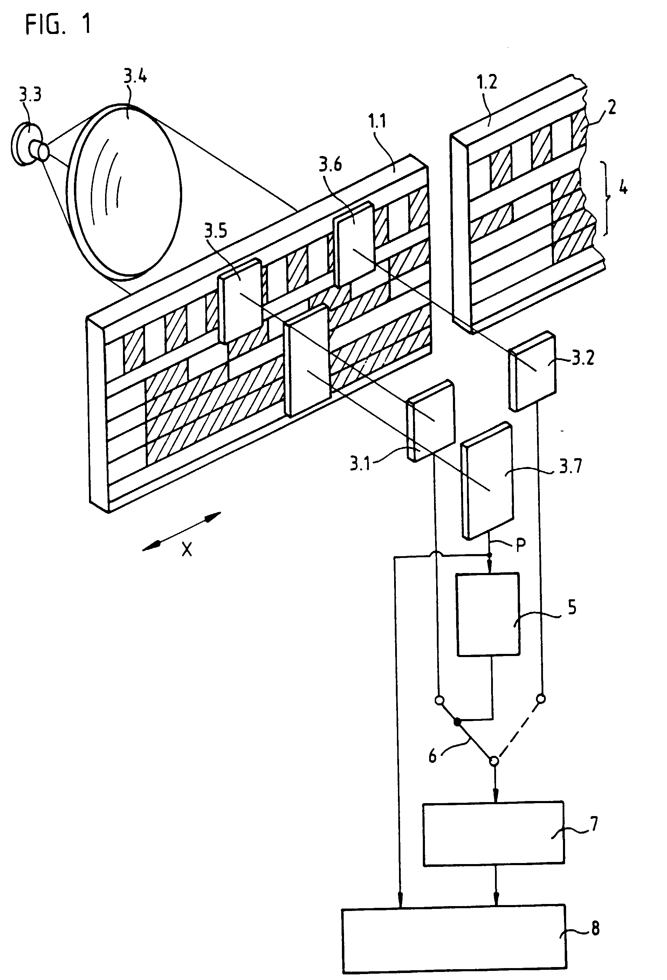

Nach Figur 1 besteht das Längenmeßsystem aus einem Maßstab 1 der von mehreren, in Meßrichtung hintereinander angeordneten Teilstücken 1.1, 1.2 aus Glas gebildet wird. Die Teilstücke 1.1, 1.2 sind in einem nicht dargestellten, aus der DE-OS 27 30 715 bekannten Gehäuse befestigt. Die Abtastung einer auf den Teilstücken 1.1, 1.2 aufgebrachten hochauflösenden inkrementalen Teilung 2 erfolgt mit einer Abtasteinheit 3, wie sie ebenfalls in der DE-OS 27 30 715 ausführlich beschrieben ist. Die Teilung 2 besteht aus einer Folge von lichtdurchlässigen und lichtundurchlässigen Strichen, die von zwei in Meßrichtung X beabstandeten Gruppen von Abtastelementen 3.1, 3.2 abgetastet wird. Dieser Abstand ist größer als die mögliche Spaltbreite zwischen zwei Maßstabteilstücken 1.1, 1.2.

Ein paralleles Lichtbündel, das von einer Lichtquelle 3.3 und einer Kondensorlinse 3.4 erzeugt wird, fällt durch die Teilung 2 und durch vier Abtastfelder jeder Abtastplatte 3.5, 3.6 und gelangt von dort auf Abtastelemente 3.1, 3.2, die den einzelnen Abtastfeldern zugeordnet sind. Bei der Bewegung der Teilstücke 1.1, 1.2 relativ zur Abtasteinheit 3 entstehen in den zwei Gruppen 3.1, 3.2 jeweils vier sinusförmige phasenverschobene Abtastsignale.

Zusätzlich zur inkrementalen Teilung 2 ist auf den Teilstücken 1.1, 1.2 eine Steuerspur in Form eines Codes 4 aufgebracht, der von einem weiteren Abtastelement 3.7 abgetastet wird. Dieser Code ist teilhafterweise ein einschrittiger Code, beispielsweise ein Gray-Code. In Abhängigkeit des Ausgangssignales P dieses Abtastelementes 3.7, das die absolute Position angibt, erfolgt eine Umschaltung von einer zur anderen Gruppe der Abtastelemente 3.1, 3.2 der inkrementalen Teilung 2. Erfindungsgemäß wird die absolute Positionsinformation P einer Umschalteinrichtung 5 zugeführt, welche abhängig von der absoluten Positionsinformation P einen Umschalter 6 ansteuert, der veranlaßt, daß die Abtastsignale der inkrementalen Teilung 2 abwechselnd von der einen Gruppe 3.1 und der anderen Gruppe 3.2 der Abtastelemente einem Zähler 7 zugeführt werden. Die Umschaltpositionen können dabei in einem Speicher der Umschalteinrichtung 5 abgelegt sein.

Der Code 4 definiert die absoluten Positionen P über die gesamte Meßlänge aller Teilstücke 1.1, 1.2, so daß diese absolute Position P auch zur Kontrolle des Zählerwertes in einer Auswerteeinheit 8 herangezogen werden kann.

Besonders vorteilhaft ist es, wenn der Meßschritt des absoluten Codes 4 größer ist als der Meßschritt der inkrementalen Teilung 2 und der Spalt zwischen zwei Teilstücken 1.1, 1.2 kleiner ist als der Meßschritt des absoluten Codes 4.

Der Code 4 ist nach Figur 1 als Steuerspur parallel neben der inkrementalen Teilung 2 vorgesehen. Diese Steuerspur 4 besteht wiederum aus mehreren Einzelspuren, aus denen in bekannter Weise Codewörter gebildet werden. Die Steuerspur 4 kann auch einen Code in Form eines Pseudo-Random-Codes - auch Kettencode genannt - aufweisen, wie er beispielsweise aus der DE-OS 39 09 767 bekannt ist.

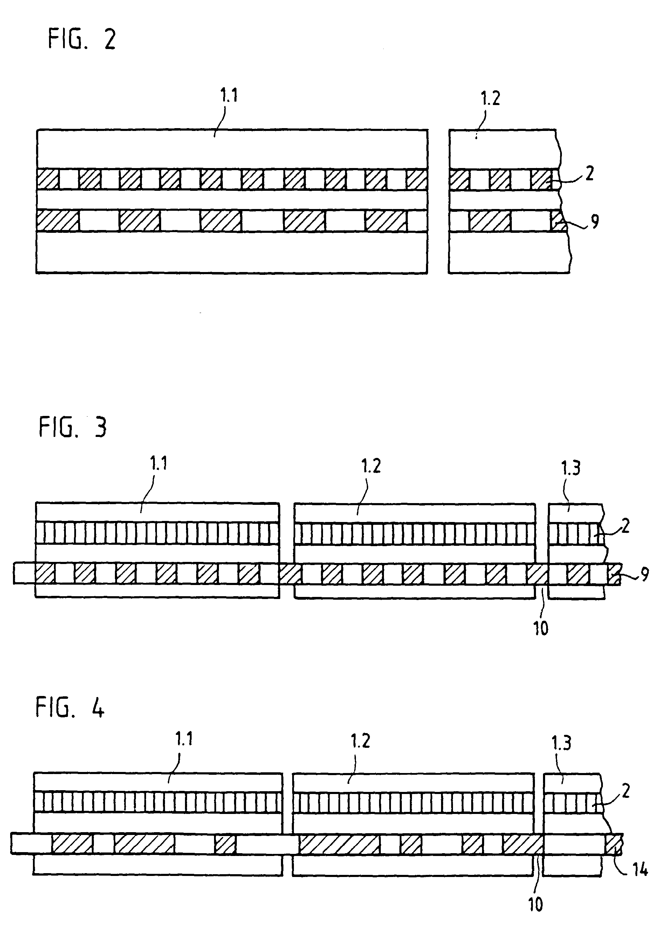

Die absolute Position P über die gesamte Meßlänge kann gemäß Figur 2 auch von einer parallel neben der feinen inkrementalen Teilung 2 angeordneten gröberen Inkremental-Teilung 9 mit einer nicht dargestellten Referenzmarke abgeleitet werden. Die Abtastsignale der groben Teilung 9 und das Referenzsignal werden einem Zähler zugeführt, wobei der Zählerstand die Absolutposition P über die gesamte Meßlänge repräsentiert. Die Teilstücke 1.1, 1.2 sollen dabei so montiert werden, daß dazwischen höchstens ein Spalt mit der halben Auflösung (Meßschritt, Zählschritt) dieser groben Teilung 9 entsteht. Die feine Teilung 2 besitzt beispielsweise eine Teilungsperiode von 8µm und die grobe Teilung 9 eine Periode von 2mm. Wenn aus jeder Periode vier Zählschritte (bekannte Vierfachunterteilung) abgeleitet werden, darf der Spalt maximal 0,25 mm betragen.

Wenn bei den Längenmeßsystemen nach Figur 1 und 2 das Abtastelement 3.7 für die Steuerspur 4,9 beim Einschalten gerade im Spaltbereich, also zwischen zwei Teilstücken 1.1, 1.2 steht, kann kein eindeutiger Absolutwert ermittelt werden. Um eine Fehlfunktion zu vermeiden ist es möglich, daß parallel zur Steuerspur 4,9 eine weitere Kontrollspur vorgesehen ist, deren Eigenschaft im gesamten Bereich der Teilstücke 1.1, 1.2 sich von der Eigenschaft des Spaltes unterscheidet. Diese Kontrollspur kann beispielsweise opak ausgebildet sein, während der Spalt transparent ist.

Um derartige Kontrollspuren zu vermeiden, ist gemäß der weiteren Ausführungsformen für die Steuerspur ein durchgehender Träger 10 vorgesehen, der neben der inkrementalen Teilung 2 auf den Teilstücken 1.1, 1.2, 1.3 aufliegt, aufgeklebt bzw. frei gespannt ist oder in ein Gehäuse 11 eingeklebt bzw. in einer darin befindlichen Nut 12 eingezogen ist. Dieser separate Träger 10 hat eine Gesamtlänge, die mindestens der gesamten Meßlänge über alle Teilstücke 1.1, 1.2, 1.3 entspricht.

Gemäß Figur 3 ist der Träger für die Steuerspur ein flexibles Stahlband 10, das neben der Inkrementalteilung 2 auf den Teilstücken 1.1, 1.2, 1.3 aufgeklebt ist. Der Träger 10 ist mit einer leicht zu fertigenden, relativ zur Teilung 2 der aus Glas oder Glaskeramik bestehenden Teilstücke 1.1, 1.2, 1.3 groben inkrementalen Teilung 9 versehen.

Besonders vorteilhaft ist es, wenn auf dem Träger 10 ein einspuriger Code 14 aufgebracht ist. Diese Ausführung ist in Figur 4 dargestellt. Der einspurige Code 14, auch als Pseudo-Random-Code bekannt, wird von mehreren, in Meßrichtung beabstandet angeordneten Abtastelementen abgetastet. Aus den Abtastsignalen werden Codewörter gebildet, die über die gesamte Meßlänge unterschiedlich sind und somit die Absolutposition P repräsentieren. In Abhängigkeit dieser Absolutpositionen P erfolgt die Umschaltung der Gruppen der Abtastelemente der feinen inkrementalen Teilung 2, wozu wieder auf die DE-OS 27 30 715, DE-OS 17 73 460 und die DE-OS 39 28 592 verwiesen wird.

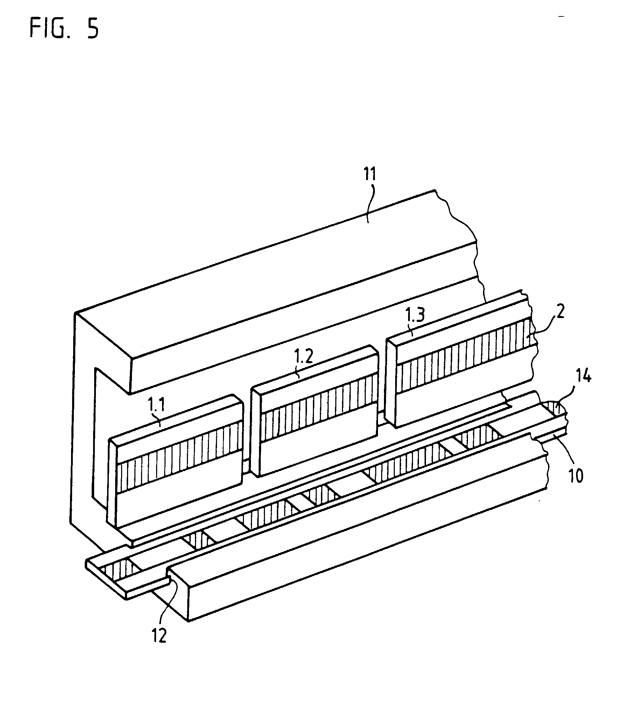

In Figur 5 ist ein gekapseltes Längenmeßsystem dargestellt. Die Teilstücke 1.1, 1.2, 1.3 sind im Gehäuse 11 befestigt. Das Stahlband 10 mit dem einspurigen Kettencode 14 ist in einer Nut 12 des Gehäuses 11 eingezogen. Die feine inkrementale Teilung 2 und der Code 14 sind somit geschützt im Gehäuse 11 untergebracht, wodurch eine kompakte Bauform gewährleistet ist.

In nicht dargestellter Weise kann der Code auf dem durchgehenden Träger auch ein bekannter mehrspuriger Code sein.

Bei allen Ausführungsformen kann die inkrementale Teilung 2 Bestandteil mehrerer hochauflösender Codespuren sein, denen die zwei umschaltbaren Gruppen von Abtastelementen 3.1 und 3.2 zugeordnet sind.

Bei den gezeigten Ausführungsformen wird die feine inkrementale Teilung 2 und die Steuerspur 4,9, 14 lichtelektrisch abgetastet, die feine Teilung 2 ist vorzugsweise eine Phasengitterteilung. Wobei es möglich ist, beide Spuren 2; 4,9, 14 im Durchlichtverfahren oder im Auflichtverfahren abzutasten. Bei den in den Figuren 3 und 4 dargestellten Ausführungen ist es vorteilhaft, wenn die feine inkrementale Teilung 2 im Durchlicht und die Steuerspur 14,9 auf dem flexiblen Träger 10 im Auflicht abgetastet wird. Die feine inkrementale Teilung und die Steuerspur können auch nach unterschiedlichen physikalischen Prinzipien abgetastet werden, z.B. die feine Teilung lichtelektrisch und die Steuerspur magnetisch.

## Patentansprüche

1. Längenmeßsystem mit einem aus mehreren Teilstücken (1.1, 1.2) bestehenden Maßstab (1) und einer Abtasteinheit (3) zur Abtastung einer hochauflösenden inkrementalen Teilung (2) der Teilstücke (1.1, 1.2), wobei die Abtasteinheit (3) zwei Gruppen von Abtastelementen (3.1, 3.2) in einem größer als die Spaltbreite zwischen zwei Teilstücken (1.1, 1.2) des Maßstabes (1) gehaltenen Abstand aufweist und parallel neben der inkrementalen Teilung (2) zumindest eine Steuerspur (4, 14) angeordnet ist, die von einem weiteren Abtastelement (3.7) abgetastet wird, und in Abhängigkeit des Ausgangssignales (P) dieses Abtastelementes (3.7) eine Umschalteinrichtung (5) eine Umschaltung von einer zur anderen Gruppe der Abtastelemente (3.1, 3.2) veranlaßt, dadurch gekennzeichnet, daß die Steuerspur (4, 14) aus einem absoluten Code besteht, aus welchem die absolute Position (P) über die gesamte Meßlänge des Maßstabes (1) abgeleitet und der Umschalteinrichtung (5) zugeführt wird, welche in Abhängigkeit dieser absoluten Position (P) eine Umschaltung der Gruppen der Abtastelemente (3.1, 3.2) veranlaßt, wobei der Meßschritt dieser Steuerspur (4, 14) größer ist als der Meßschritt der inkrementalen Teilung (2).

2. Längenmeßsystem nach Anspruch 1, dadurch gekennzeichnet, daß auf jedem Teilstück (1.1, 1.2) ein absoluter Code in Form eines mehrspurigen Codes (4) aufgebracht ist.

3. Längenmeßsystem nach Anspruch 1, dadurch gekennzeichnet, daß auf jedem Teilstück ein absoluter Code in Form eines einspurigen Kettencodes aufgebracht ist.

4. Längenmeßsystem noch einem der Ansprüche 2 oder 3, dadurch gekennzeichnet, daß der Spalt zwischen zwei Teilstücken (1.1, 1.2) kleiner ist als der Meßschritt des absoluten Codes (4, 14).

5. Längenmeßsystem mit einem aus mehreren Teilstücken (1.1, 1.2) bestehenden Maßstab (1) und einer Abtasteinheit (3) zur Abtastung einer hochauflösenden inkrementalen Teilung (2) der Teilstücke (1.1, 1.2), wobei die Abtasteinheit (3) zwei Gruppen von Abtastelementen (3.1, 3.2) in einem größer als die Spaltbreite zwischen zwei Teilstücken (1.1, 1.2) des Maßstabes (1) gehaltenen Abstand aufweist und parallel neben der inkrementalen Teilung (2) zumindest eine Steuerspur (9) angeordnet ist, die von einem weiteren Abtastelement (3.7) abgetastet wird, und in Abhängigkeit des Ausgangssignales (P) dieses Abtastelementes (3.7) eine Umschalteinrichtung (5) eine Umschaltung von einer zur anderen Gruppe der Abtastelemente (3.1, 3.2) veranlaßt, dadurch gekennzeichnet, daß die Steuerspur aus einer inkrementalen Teilung (9) besteht, deren Abtastsignale einem Zähler zugeführt werden, wobei der Zählerstand die Absolutposition (P) über die gesamte Meßlänge repräsentiert und einer Umschalteinrichtung (5) zugeführt wird, welche in Abhängigkeit dieser absoluten Position (P) eine Umschaltung der Gruppen der Abtastelemente (3.1, 3.2) veranlaßt, wobei der Meßschritt der Steuerspur (9) größer ist als der Meßschritt der inkrementalen Teilung (2).

6. Längenmeßsystem nach Anspruch 5, dadurch gekennzeichnet, daß auf jedem Teilstück (1.1, 1.2) eine Steuerspur in Form einer groben inkrementalen Teilung (9) aufgebracht ist, wobei der Spalt zwischen zwei Teilstücken (1.1, 1.2) kleiner ist als der Meßschritt dieser groben Teilung (9).

7. Längenmeßsystem nach einem der Ansprüche 1 oder 5, dadurch gekennzeichnet, daß die Steuerspur (9, 14) auf einem separaten Träger (10) aufgebracht ist, der eine Länge aufweist, die mindestens der gesamten Meßlänge über alle Teilstücke (1.1, 1.2, 1.3) entspricht.

8. Längenmeßsystem nach Anspruch 7, dadurch gekennzeichnet, daß der Träger ein flexibles Stahlband (10) ist.

9. Längenmeßsystem nach Anspruch 8, dadurch gekennzeichnet, daß die Teilstücke (1.1, 1.2, 1.3) aus Glas bestehen und innerhalb eines Gehäuses (11) befestigt sind, und daß das Stahlband (10) in einer Nut (12) des Gehäuses (11) angeordnet ist.

## Claims

1. Length measuring system with a scale (1) comprising a plurality of sections (1.1, 1.2), and with a scanner unit (3) for scanning a high-resolution incremental division (2) of the sections (1.1, 1.2), in which the scanner unit (3) has two groups of scanner members (3.1, 3.2) at an interval which is kept greater than the gap width between two sections (1.1, 1.2) of the scale (1), and there is disposed in parallel next to the incremental division (2) at least one control track (4, 14) which is scanned by a further scanner member (3.7), and in dependence on the output signal (P) of this scanner member (3.7) a switch-over device (5) causes a switch-over from one group to the other of the scanner members (3.1, 3.2), characterised in that the control track (4, 14) comprises an absolute code from which the absolute position (P) is derived via the overall measurement length of the scale (1) and is passed to the switch-over device (5) which, in dependence on this absolute position (P), causes a switch-over of the groups of scanner members (3.1, 3.2), the measurement step of this control track (4, 14) being greater than the measurement step of the incremental division (2).

2. Length measuring system according to claim 1, characterised in that an absolute code in the form of a multi-track code (4) is applied to each section (1.1, 1.2).

3. Length measuring system according to claim 1, characterised in that an absolute code in the form of a single-track chain code is applied to each section.

4. Length measuring system according to claim 2 or 3, characterised in that the gap between two sections (1.1, 1.2) is smaller than the measurement step of the absolute code (4, 14).

5. Length measuring system with a scale (1) comprising a plurality of sections (1.1, 1.2) and a scanner unit (3) for scanning a high-resolution incremental division (2) of the sections (1.1, 1.2), in which the scanner unit (3) has two groups of scanner members (3.1, 3.2) at an interval which is kept greater than the gap width between two sections (1.1, 1.2) of the scale (1), and there is disposed in parallel next to the incremental division (2) at least one control track (4, 14) which is scanned by a further scanner member (3.7), and in dependence on the output signal (P) of this scanner member (3.7) a switch-over device (5) causes a switch over from one group to the other of the scanner members (3.1, 3.2), characterised in that the control track (4, 14) comprises an incremental division (9) whose scanning signals are passed to a counter, the state of the counter representing the absolute position (P) over the entire measurement length and being passed to a switch-over device (5) which, in dependence on this absolute position (P), causes a switch-over of the groups of scanner members (3.1, 3.2), the measurement step of this control track (4, 14) being greater than the measurement step of the incremental division (2).

6. Length measuring system according to claim 5, characterised in that there is applied to each section (1.1, 1.2) a control track in the form of a coarse incremental division (9), the gap between two sections (1.1, 1.2) being smaller than the measurement step of this coarse division (9).

7. Length measuring system according to one of claims 1 or 5, characterised in that the control track (9, 14) is mounted on a separate carrier (10) which has a length corresponding at least to the overall measurement length over all sections (1.1, 1.2, 1.3).

8. Length measuring system according to claim 7, characterised in that the carrier is a flexible steel strip (10).

9. Length measuring system according to claim 8, characterised in that the sections (1.1, 1.2, 1.3) are made of glass and are attached inside a housing (11), and in that the steel strip (10) is disposed in a groove (12) in the housing (11).

## Revendications

1. Dispositif de mesure de longueurs comportant une règle (1) graduée formée de plusieurs tronçons (1.1, 1.2) et une unité de balayage (3) pour le balayage d'une graduation (2) incrémentale à résolution élevée des tronçons (1.1, 1.2) de règle, l'unité de balayage (3) comportant deux groupes d'éléments de balayage (3.1, 3.2) qui sont fixés à une distance l'un de l'autre supérieure à l'espace entre deux tronçons (1.1, 1.2) de la règle (1) graduée, au moins une piste de commande (4, 14) qui est balayée par un élément de balayage (3.7) supplémentaire étant disposée à proximité de la graduation (2) incrémentale, parallèlement à celle-ci, et un dispositif (5) de commutation provoquant une commutation d'un groupe d'éléments de balayage (3.1, 3.2) à l'autre en fonction du signal de sortie (P) de cet élément de balayage (3.7), caractérisé par le fait que la piste de commande (4, 14) est formée d'un code absolu, à partir duquel la position (P) absolue par rapport à la longueur de mesure totale de la règle (1) graduée est déduite et transmise au dispositif (5) de commutation qui, en fonction de cette position (P) absolue, provoque une commutation des groupes d'éléments de balayage (3.1, 3.2), le pas de mesure de la piste dc commande (4, 14) étant supérieur au pas de mesure de la graduation (2) incrémentale.

2. Dispositif de mesure de longueurs selon la revendication 1, caractérisé par le fait qu'un code absolu, sous la forme d'un code (4) à plusieurs pistes, est appliqué sur chaque tronçon (1.1, 1.2).

3. Dispositif de mesure de longueurs selon la revendication 1, caractérisé par le fait qu'un code absolu, sous la forme d'un code-chaîne monopiste, est appliqué sur chaque tronçon.

4. Dispositif de mesure de longueurs selon l'une des revendications 2 ou 3, caractérisé par le fait que l'espace entre deux tronçons (1.1, 1.2) est inférieur au pas de mesure du code absolu (4, 14).

5. Dispositif de mesure de longueurs comportant une règle (1) graduée formée de plusieurs tronçons (1.1, 1.2) et une unité de balayage (3) pour le balayage d'une graduation (2) incrémentale à résolution élevée des tronçons (1.1, 1.2) de règle, l'unité de balayage (3) comportant deux groupes d'éléments de balayage (3.1, 3.2) qui sont fixés à une distance l'un de l'autre supérieure à l'espace entre deux tronçons (1.1, 1.2) de la règle (1) graduée, au moins une piste de commande (9) qui est balayée par un élément de balayage (3.7) supplémentaire étant disposée à proximité de la graduation (2) incrémentale, parallèlement à celle-ci, et un dispositif (5) de commutation provoquant une commutation d'un groupe d'éléments de balayage (3.1, 3.2) à l'autre en fonction du signal de sortie (P) dudit élément de balayage (3.7), caractérisé par le fait que la piste de commande est formée d'une graduation (9) incrémentale, dont les signaux de balayage sont transmis un compteur, la position du compteur représentant la position absolue (P) par rapport à la longueur de mesure totale et étant transmise à un dispositif (5) de commutation qui provoque une commutation des groupes d'éléments de balayage (3.1, 3.2) en fonction de ladite position (P) absolue, le pas de mesure de la piste de commande (9) étant supérieur au pas de mesure de la graduation (2) incrémentale.

6. Dispositif de mesure de longueurs selon la revendication 5, caractérisé par le fait qu'une piste de commande, sous la forme d'une graduation (9) incrémentale grossière, est appliquée sur chaque tronçon (1.1, 1.2), l'espace entre deux tronçons (1.1, 1.2) étant inférieur au pas de mesure de la graduation (9) incrémentale grossière.

7. Dispositif de mesure de longueurs selon l'une des revendications 1 ou 5, caractérisé par le fait que la piste de commande (9, 14) incrémentale est appliquée sur un support (10) séparé, dont la longueur correspond au moins à la longueur de mesure totale de tous les tronçons (1.1, 1.2, 1.3).

8. Dispositif de mesure de longueurs selon la revendication 7, caractérisé par le fait que le support est un ruban d'acier (10) souple.

9. Dispositif de mesure de longueurs selon la revendication 8, caractérisé par le fait que les tronçons (1.1, 1.2, 1.3) de règle sont en verre et sont fixés à l'intérieur d'un boîtier (11) et par le fait que le ruban d'acier (10) est disposé dans une rainure (12) du boîtier (11).
